## Europäisches Patentamt
## European Patent Office
## Office européen des brevets

(19)

(11) Numéro de publication: **0 098 781**
**B1**

(12)

# FASCICULE DE BREVET EUROPÉEN

(45) Date de publication du fascicule du brevet:
**24.09.86**

(21) Numéro de dépôt: **83401363.3**

(22) Date de dépôt: **01.07.83**

(51) Int. Cl.⁴: **G 21 C  19/32**

(54) Dispositif de vérification de la déconnexion des grappes de contrôle d'un réacteur nucléaire.

(30) Priorité: **01.07.82 FR 8211576**

(43) Date de publication de la demande:
**18.01.84 Bulletin 84/3**

(45) Mention de la délivrance du brevet:
**24.09.86 Bulletin 86/39**

(84) Etats contractants désignés:
**BE CH DE GB IT LI SE**

(56) Documents cité:
**FR-A-2 213 560**
**FR-A-2 326 763**
**FR-A-2 382 747**
**FR-A-2 460 027**
**US-A-3 861 999**

(73) Titulaire: **FRAMATOME ET CIE., Tour Fiat 1, Place de la Coupole, F-92400 Courbevoie (FR)**

(72) Inventeur: **Coussau, Jean, 1 rue Gossec, F-75012 Paris (FR)**
Inventeur: **Genton, Hubert, 7 rue Elie Rochette, F-69007 Lyon (FR)**

(74) Mandataire: **Lavoix, Jean, c/o Cabinet Lavoix 2, Place D'Estienne D'Orves, F-75441 Paris Cedex 09 (FR)**

EP 0 098 781 B1

LIBER, STOCKHOLM 1986

## Description

L'invention a pour objet un dispositif de vérification de la déconnexion des tiges de commande des grappes de contrôle d'un réacteur nucléaire avant enlèvement des équipements internes.

Un réacteur nucléaire, notamment du type à eau pressurisée, comporte, à l'intérieur d'une fosse formant piscine, une cuve fermée par un couvercle amovible et contenant le coeur. A l'intérieur du coeur sont placées des grappes de barres de contrôle qui peuvent être déplacées verticalement pour le contrôle du fonctionnement du réacteur. A cet effet, ces grappes coulissent dans des colonnes de guidage formant au-dessus du coeur une structure appelée habituellement équipement interne supérieur et qui monte jusqu'au niveau du plan d'ouverture de la cuve, celle-ci étant fermée par un couvercle amovible. Le déplacement de chaque grappe est commandé individuellement par une tige de commande fixée à sa partie inférieure sur une tête de fixation de la grappe et qui traverse le couvercle en passant dans un tube adaptateur solidaire de celui-ci. Sur le tube adaptateur sont montés des mécanismes de levée et de descente de la tige, placés à l'intérieur d'un carter étanche prolongé vers le haut par un fourreau fermé à sa partie supérieure et dans lequel peut coulisser la tige de commande. Lorsque l'on veut procéder au rechargement en combustibles ou à toute opération de contrôle à l'intérieur du coeur, il fàut non seulement ouvrir le couvercle mais également enlever les équipements internes supérieurs pour accéder au coeur qui se trouve au-dessous.

Bien entendu, pour arrêter le réacteur, les grappes de contrôle ont toutés été descendues en position d'introduction maximale dans le réacteur, les têtes de fixation des grappes se trouvant alors un peu au-dessus de la plaque supérieure de coeur. Dans cette position, les tiges de commande qui surmontent les grappes restent guidées dans les équipements internes supérieurs et passent dans les tubes adaptateurs, leurs têtes se trouvant un peu au-dessus du niveau des mécanismes de commande.

Lorsque l'on peut ouvrir le coeur, après avoir rempli la piscine, dépressurisé et refroidi sensiblement le coeur aux conditions ambiantes, on enlève les dalles anti projectiles, puis l'on démonte un certain nombre d'équipements comme par exemple les gaines de ventilations des mécanismes des grappes de contrôle et le calorifuge de la bride de la cuve. Ensuite, ces opérations de démontage peuvent être effectuées par exemple au moyen de la machine de chargement qui est constituée d'une plateforme déplaçable sur des rails au-dessus de la cuve. Sur cette plateforme est montée une flèche qui, à sa partie supérieure, comporte un mono rail muni d'un palan qui peut ainsi se déplacer de façon à occuper une position précise au-dessus du coeur, et en particulier se centrer dans l'axe d'une tige de commande.

On peut alors procéder à l'enlèvement du couvercle. La plaque supérieure des équipements internes se trouve sensiblement au niveau du plan d'ouverture. Les tiges de commande, qui se dressent verticalement au-dessus de la plaque supérieure, sont maintenues dans les équipements internes et retirés en même temps que ceux-ci. Chaque tige de commande étant reliée à une grappe par son extrémité inférieure, il est donc nécessaire de procéder tout d'abord à la déconnexion de toutes les tiges de commande avant de retirer les équipements internes.

A cet effet, on utilise un outil de déconnexion qui est porté par la machine de chargement.

Généralement, la tige de commande comprend un fourreau tubulaire à l'intérieur duquel est montée coulissante une tige axiale fixée à sa partie supérieure sur une tête de fixation qui dépasse au-dessus du fourreau tubulaire. La paroi extérieure decelui-ci est crantée sur sa plus grande partie pour permettre l'accrochage des mécanismes de commande. En outre, l'extrémité inférieure du fourreau est constituée par une pluralité de doigts susceptibles de s'écarter et de se rapprocher radialement et qui constituent un mandrin de fixation sur la griffe. A cet effet, les parois internes des doigts ménagent vers l'intérieur une partie conique creuse dans laquelle peut s'engager une olive fixée à l'extrémité inférieure de la tige axiale. Un ressort prenant appui sur le fourreau tubulaire et sur une butée de la tige axiale pousse celle-ci vers le bas en faisant pénétrer l'olive entre les doigts de fixation de façon à écarter ceux-ci contre l'action de ressorts qui tendent au contraire à les rapprocher lorsque l'olive est retirée. L'outil de déconnexion est placé à la partie inférieure d'une tige verticale suspendue à la machine de chargement et comprend deux parties coulissantes susceptibles de s'accrocher l'une sur le fourreau tubulaire et l'autre sur la tête de fixation de la tige de commande. Par coulissement des deux parties de l'outil on peut donc remonter l'olive pour laisser se resserrer les doigts de fixation ou la laisser descendre pour écarter les doigts.

Par ailleurs, la tête de fixation de chaque grappe de contrôle est constituée par une douille creuse dans laquelle peut pénétrer l'extrémité inférieure de la tige de commande lorsque les doigts sont resserrés. Ceux-ci sont munis extérieurement de crans qui, lorsqu'on laisse l'olive remonter, s'engagent dans des cannelures correspondantes ménagées sur la paroi interne de la douille. Ainsi peut être assurée la connexion ou la déconnexion de chaque tige de commande avec la grappe correspondante.

Après l'ouverture de la cuve, l'opérateur, placé sur la machine de chargement à laquelle est suspendu l'outil de déconnexion positionne celui-ci successivement sur les tiges de commandes pour les déconnecter une à une. Après avoir commandé le resserrement des doigts de fixation, il souléve la tige et le fourreau pour retirer les doigts de la douille puis laisse s'écarter de nouveau les doigts et redescend la tige et le fourreau jusqu'à ce que son extrémité inférieure repose sur la partie supérieure de la douille, sans y pénétrer.

A la fin de l'opération, toutes les tiges de commande sont donc déconnectées et simplement posées sur les têtes de fixation des grappes correspondantes. On peut alors retirer les équipements internes avec les tiges de commande, les grappes de contrôle restant en place.

Il est bien certain que l'on doit être absolument sûr de la déconnexion de toutes les tiges de commande. En effet, au moment du soulèvement des équipements internes, il est difficile de se rendre compte si l'on soulève en même temps une grappe qui serait restée accrochée accidentellement. Or si celle-ci est retirée du coeur, il est ensuite extrêmement difficile de la replacer à l'intérieur du coeur. C'est pourquoi il est nécessaire de vérifier, avant l'enlèvement des équipements internes, que toutes les tiges de commande ont bien été déconnectées.

A cet effet, on peut placer des dynamomètres ou des pesons sur les tiges mais les mesures obtenues peuvent être entachées d'erreurs.

L'invention a pour objet un dispositif très simple qui permet, sans allonger le temps de manoeuvre, de vérifier que toutes les tiges de commande ont bien été déconnectées de façon à être sûr que l'on peut soulever les équipements internes sans risque d'entraîner une grappe de contrôle.

Le dispositif selon l'invention comprend une tige de longueur supérieure à la distance entre la plateforme et le niveau des têtes des tiges de commande, munie à sa partie supérieure de moyens de suspension et de commande de la rotation de la tige autour de son axe vertical et, à sa partie inférieure, d'un manchon de centrage muni d'une butée interne susceptible de venir s'appuyer sur une partie de la tige de commande se trouvant à un niveau déterminé par rapport à l'extrémité supérieure de la tige, et d'un bras s'étendant transversalement à l'horizontale au niveau des têtes des tiges déconnectées et de longueur supérieure à la distance entre les axes des grappes ainsi qu'un moyen de contrôle du niveau de la perche par rapport à la tête de la tige de commande.

Dans un mode de réalisation préférentiel, le dispositif comprend un moyen de contrôle du niveau de la tige par rapport à la tête de la tige de commande, constitué par une pige montée coulissante dans l'axe de la tige et prenant appui vers le bas sur une butée ménagée sur la tige de telle sorte que son extrémité inférieure s'étende vers l'intérieur et dans l'axe du fourreau de guidage jusqu'à un niveau correspondant à un enfoncement déterminé de la tête de la tige de commande dans le manchon de centrage.

L'invention va maintenant être décrite, en se référant à un mode de réalisation particulier, donné à titre d'exemple, et représenté sur les dessins annexés.

La figure 1 représente schématiquement la piscine surmontant le puits de la cuve, la machine de chargement et l'outil de déconnexion.

La figure 2 illustre le fonctionnement d'une tige de commande de type classique.

La figure 3 représente en élévation le dispositif de vérification, en deux vues placées côte à côte.

La figure 4 et la figure 5 sont des vues de détails, en coupe axiale, respectivement de la partie supérieure et de la partie inférieure du dispositif.

La figure 6 est un schéma illustrant, en perspective, le fonctionnement du dispositif.

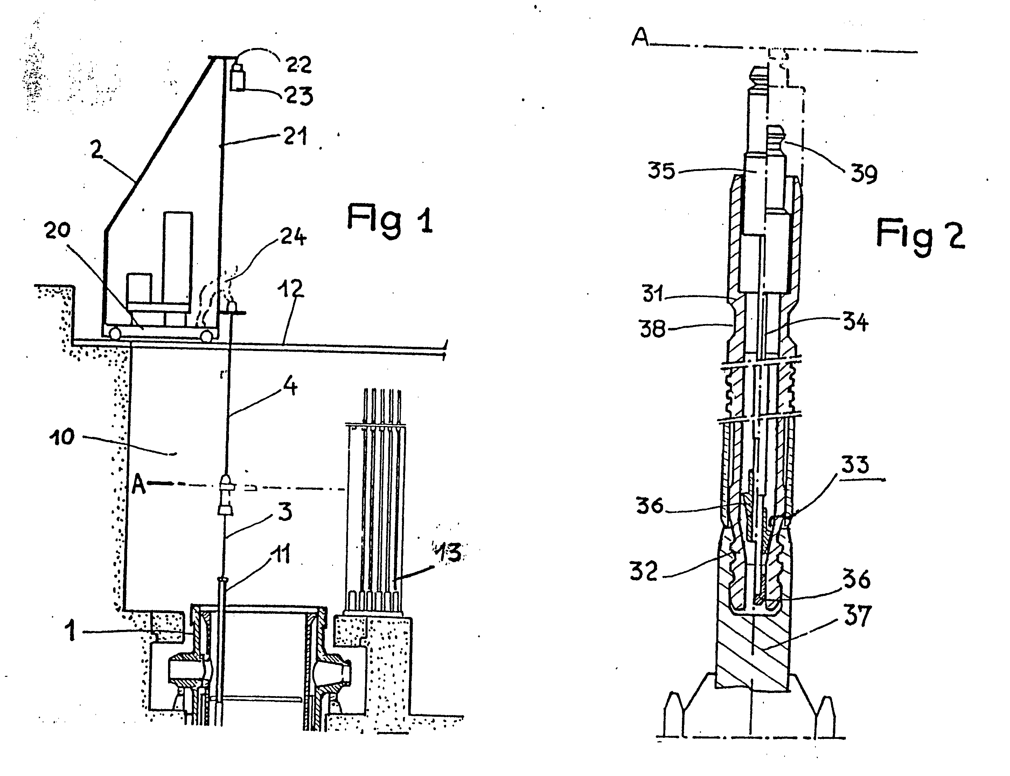

Sur la figure 1, on a représenté la partie supérieure de la cuve 1 du réacteur, le couvercle étant enlevé. Au-dessus du réacteur se trouve la piscine 10 remplie d'eau, dans laquelle on a placé un ratelier 13 de stockage des outils.

Au-dessus de l'eau sont placés des rails 12 sur lesquels peut se déplacer la machine de chargement 2. Celle-ci est constituée d'une plateforme 20 et d'une flèche 21 à la partie supérieure de laquelle est fixée un monorail 22 supportant un palan 23 qui peut se déplacer sur le monorail perpendiculairement à la direction de déplacement de la plateforme 20 sur les rails 12.

De la sorte, par des déplacements perpendiculaires, il est possible de positionner le palan 23 au-dessus de n'importe quel point de la cuve, le monorail 22 couvrant toute la largeur de celle-ci.

Les déplacements de la plateforme et du monorail sont commandés par un opérateur 24 se trouvant sur la plateforme.

A l'intérieur de la cuve 1 se trouvent les équipements internes dont on a représenté un seul tube guide 11 contenant une tige de commande 3.

La tige de commande est du type connu qui a été représenté sur la figure 2.

Comme on l'a indiqué plus haut, la tige de commande 3 est constituée d'un fourreau tubulaire 31 dont l'extrémité inférieure porte plusieurs doigts de fixation 32 qui limitent un espace interne 33 en forme de cône creux. A l'intérieur de fourreau 31 est placée une tige axiale 34 dont l'extrémité supérieure est fixée sur la tête 35 de la tige de commande et qui porte à son extrémité inférieure une olive 36 susceptible d'écarter les doigts de fixation 32 en descendant dans l'espace conique 33 sous l'action d'un ressort non représenté. Ainsi, la grappe de contrôle étant munie d'une tête de fixation 37 en forme de douille creuse dans laquelle pénètrent les doigts 32 de la tige de commande, l'écartement de ceux-ci par l'olive 36 assure la solidarisation de la tige de commande 3 avec la tête de fixation 37 de la grappe.

Pour déconnecter la tige de commande, on utilise donc un outil qui prend appui sur des canelures 38 et 39 ménagées respectivement sur le fourreau extérieur 31 et sur la tête 35 de la tige de commande. En faisant coulisser vers le haut la tête 35 tout en maintenant le fourreau 31, comme on l'a représenté sur la partie gauche de la figure, l'olive 36 remonte au-dessus de la partie conique 33 et permet aux doigts 32 de se resserrer. Si l'on soulève alors la tige de commande, celle-ci se retire de la douille 37. Dans cette position, on laisse redescendre sous l'action du ressort, l'olive 36 qui écarte de nouveau les doigts 32 et l'on redescend la tige de commande 3 jusqu'à ce que son extrémité inférieure repose sur la partie supérieure de la tête de fixation 37.

Lorsqu'on a effectué ces opérations sur toutes les tiges de commande, les extrémités supérieures de celles-ci se trouvent normalement au même niveau A indiqué sur les figures. L'outil de vérification est manoeuvré manuellement par l'opérateur qui se trouve sur la plateforme de la machine de chargement.

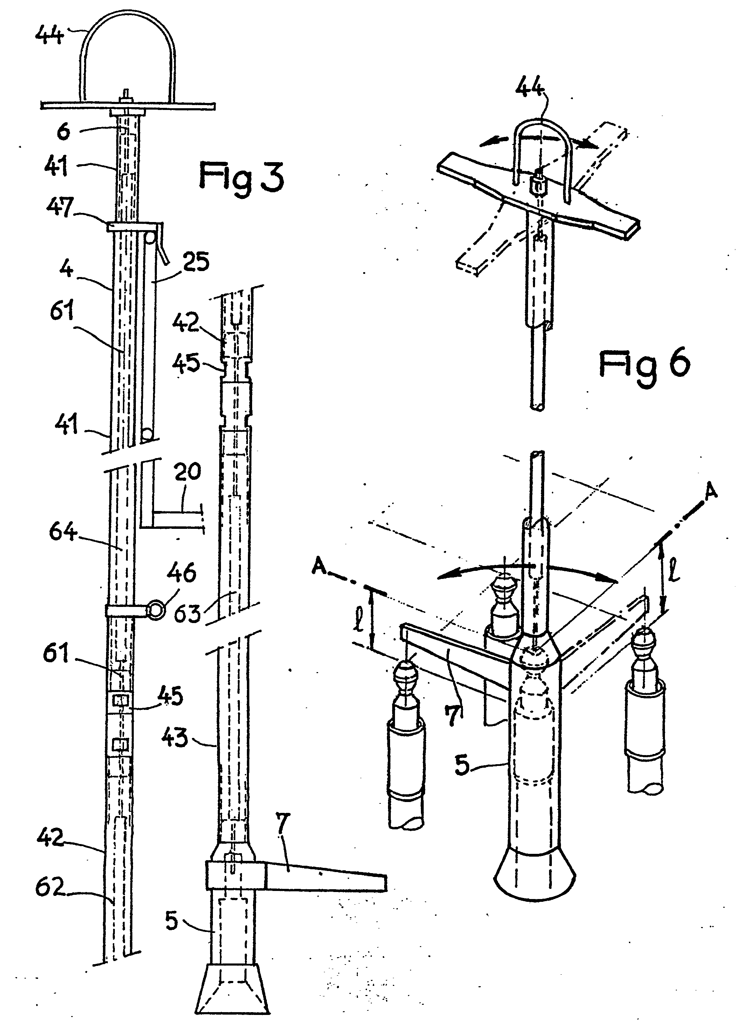

Le dispositif de vérification se compose essentiellement d'une perche de grande longueur constituée de préférence de trois parties accouplées bout à bout 41, 42, 43, que l'on a représentées côte à côte sur la figure 3.

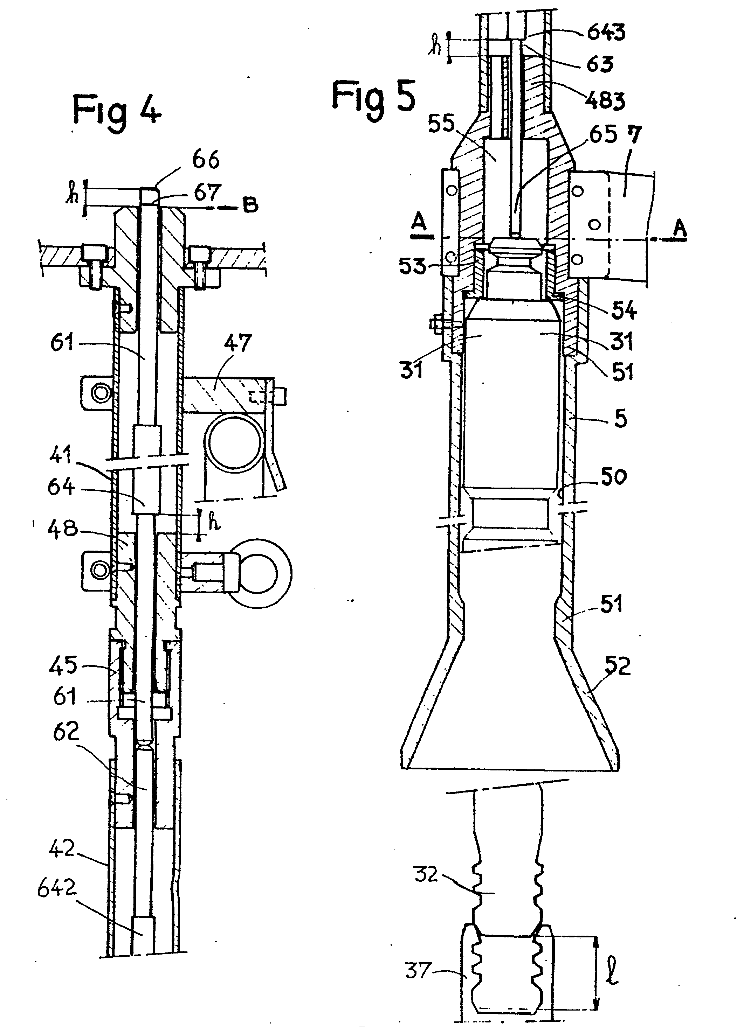

La partie supérieure est donc constituée d'un premier élément de perche 41 muni à sa partie supérieure d'un arceau de commande 44 et, à sa partie inférieure, d'un moyen d'accouplement 45 sur la partie médiane 42. L'appareil est tenu par l'opérateur et retenu en outre par une corde de sécurité fixée à un anneau de levage 46, lui-même fixé par un collier sur la perche 41 à un niveau adequat, et il est utile de prévoir également un collier d'accrochage 47 permettant de poser le dispositif sur la rambarde 25 de la machine de chargement lorsqu'il n'est pas utilisé, de façon à garder le dispositif à portée pour faire la vérification après chaque déconnexion d'une tige de commande. La partie médiane 42 est munie également à ses deux extrémités d'organes d'accouplement 45 respectivement sur l'extrémité inférieure de la partie supérieure 41 et sur l'extrémité supérieure de la partie inférieure 43. Celle-ci se termine à son extrémité inférieure par un manchon de centrage 5 représenté en détails sur la figure 5.

Le manchon de centrage 5 est constitué essentiellement d'un tube dont la paroi interne 50 comprend à ses extrémités supérieure et inférieure deux portées de centrage 51 de diamètre sensiblement égal au diamètre extérieur du fourreau 31 de la tige de commande. En outre, le manchon de centrage 5 est prolongé à sa partie inférieure par une extrémité évasée 52 qui permet à la perche de s'enfiler sur la tige de commande, le positionnement approximatif ayant été effectué à vue par l'opérateur 24.

La hauteur du manchon de centrage 5 s'enfilant sur la tige de commande est suffisante pour assurer la verticalité du dispositif de vérification lorsque celui-ci est en place.

A la partie supérieure du manchon de centrage 5 est placé une butée 53 se composant d'une douille de diamètre un peu supérieur à celui de la tête 35 de la tige de commande et dont la partie inférieure est constituée par une bride 54 qui vient an butée sur le bord supérieur du fourreau 31 de la tige de commande 3. Dans cette position, la tête 35 de la tige de commande pénètre donc à l'intérieur du manchon de centrage jusqu'au niveau A qui est fixé par rapport au manchon de centrage par la bride 54.

Comme on l'a représenté sur la figure 4, les accouplements 45 peuvent être de simples liaisons vissées.

Bien que le niveau du dispositif par rapport à la tige de commande soit fixé par la butée 54, il est utile de contrôler ce niveau au moyen d'une pige 6 s'étendant dans l'axe de la perche 4 et constitué également de trois éléments 61, 62, 63 correspondant aux éléments 41, 42, 43 de la perche. Comme on le voit sur la figure 4, chaque élément de la pige telle que 61 comprend une partie élargie 64 formant à sa base un épaulement qui vient en butée sur l'extrémité inférieure 48 de la perche au-dessus de l'accouplement 45. Au-dessous de cet épaulement, la pige a une section plus étroite et coulisse à l'intérieur d'un orifice pratiqué dans l'extrémité inférieure 48 jusqu'audessous du niveau de l'accouplement 45 où elle vient s'appuyer sur, l'extrémité supérieure de la pige médiane 62. Celle-ci est constituée de la même façon, ainsi que la pige inférieure 63 qui possède également un épaulement 643 venant en butée sur l'extrémité inférieure 483 de la perche inférieure 43, audessus du manchon de centrage 5. L'extrémité inférieure 65 de la pige inférieure 63 pénètre à l'intérieur de l'espace central 55 du manchon de centrage 5 jusqu'à un niveau inférieur au niveau A occupé normalement par la tête 35 de la tige de commande lorsque le dispositif est enfilé sur celle-ci. par conséquent, quand le dispositif est en place, la butée 54 s'appuyant sur le fourreau 31, les trois éléments de la pige sont soulevés d'une hauteur h dont dépasse l'extrémité supérieure 66 de la pige 61, au-dessus du niveau supérieur E du dispositif, comme on l'a représenté sur la figure 4. Il est possible par exemple de placer un trait de repère 67 sur l'extrémité supérieure 66 de la pige 61 de façon à vérifier la hauteur relative du corps 31 de la tige de commande par rapport à la tête de fixation 35.

Enfin, le dispositif comprend à sa partie inférieure un bras 7 qui est fixé sur l'extrémité inférieure de la perche 4, au-dessus du manchon de centrage 5, de façon à s'étendre transversalement sensiblement au niveau de la tête de la tige contrôlée. Le fonctionnement du dispositif, illustré notamment par la figure 6, est donc le suivant:

Après avoir déconnecté et soulevé la première tige de commande au moyen de l'outil de déconnexion, de façon que son extrémité inférieure repose sur la tête de fixation 37 de la grappe correspondante, on met en place manuellement le dispositif de vérification 4 que l'on vient de décrire. On descend le dispositif et l'on enfile le manchon de centrage 5 sur la tige de commande jusqu'à venir en butée sur le corps 31 de celle-ci dans la position représentée sur la figure 5. Normalement, la tige de commande est seule déconnectée et se trouve donc au niveau A alors que toutes les autres tiges sont à un niveau inférieur puisqu'elles sont enfoncées dans la tête de fixation de la longueur 1 (figure 5). L'opérateur 24 fait alors tourner à la main le dispositif autour de son axe de façon que le bras 7 décrive un cercle. L'opération de vérification s'effectue pendant que l'on prépare la déconnexion de la grappe suivante.

Si la tige de commande contrôlée est bien déconnectée, le bras 7 ne doit rencontrer aucun obstacle puisque toutes les autres tiges sont en position basse. On accroche alors le dispositif à la rambarde par le crochet 47.

On continue ainsi de vérifier chaque tige après l'avoir déconnectée et en procédant évidemment dans un ordre déterminé de façon à repérer la position de chaque tige contrôlée pour prévoir le débattement possible du bras transversal vis-à-vis des autres tiges déjà déconnectées.

Ainsi, de proche en proche, on peut vérifier la déconnexion de chaque tige l'une après l'autre et être sûr que l'on ne risque pas d'emporter une grappe en enlevant les équipements internes. Le dispositif de vérification, qui ne supporte aucun effort, peut être constitué en aluminium et par conséquent assez léger pour être manipulé à la main par l'opérateur. Il en résulte que la durée de l'opération de déconnexion des tiges n'est pas augmentée par cette vérification.

Bien entendu, l'invention ne se limite pas aux détails du mode de réalisation qui vient d'être décrit, qui pourrait être modifié par l'emploi de moyens équivalents ou bien être perfectionné. De même, on pourrait imaginer d'autres manières d'utiliser le dispositif de vérification, par exemple pour effectuer la vérification par groupes de tiges et non pas tige par tige, comme cela vient d'être décrit.

**Revendications**

1.- Dispositif de vérification de la déconnexion des tiges de commande des grappes de contrôle avant enlèvement des équipements internes d'un réacteur nucléaire comportant, à l'intérieur d'une fosse (10) formant piscine, une cuve (1) fermée par un couvercle amovible et contenant le coeur, un ensemble de grappes de contrôle montées individuellement coulissantes verticalement dans des équipements internes supérieurs formant une structure de guidage au-dessus du coeur, chaque grappe étant munie à sa partie supérieure d'une tête de fixation amovible (37) sur la partie inférieure (32) d'une tige de commande (3) traversant le couvercle sur lequel prend appui un mécanisme de levée et de descente de la tige montée coulissante dans un fourreau de guidage, ladite cuve (1) pouvant être ouverte après arrêt du réacteur provoqué par descente des grappes de contrôle en position basse, les mécanismes et les fourreaux de guidage étant d'abord enlevés avec le couvercle puis les tiges de commande (3) déconnectées une à une au moyen d'un outil de déconnexion suspendu à une machine de chargement (2) constituée d'une plateforme (20) déplaçable au-dessus de la piscine (10) et munie d'un organe (23) de suspension des outils et de moyens (22) de positionnement de l'outil suspendu, à la verticale de chacune des tiges (3), caractérisé par le fait qu'il comprend une perche (4) de longueur supérieure à la distance entre la plateforme et le niveau des têtes des tiges de commande, munie à sa partie supérieure de moyens (44) de suspension et de commande de la rotation de la perche autour de son axe vertical et à sa partie inférieure, d'un manchon (5) de centrage muni d'une butée interne (54) susceptible de venir s'appuyer sur une partie (31) de la tige de commande (3) se trouvant à un niveau déterminé par rapport à l'extrémité supérieure de la tige (3), et d'un bras (7) s'étendant transversalement à l'horizontale au niveau des têtes (32) des tiges déconnectées et de longueur supérieure à la distance entre les axes des grappes ainsi qu'un moyen de contrôle (6) du niveau de la perche (4) par rapport à la tête de la tige de commande (3).

2.- Dispositif de vérification selon la revendication 1, caractérisé par le fait que le moyen de contrôle du niveau de la perche (4) par rapport à la tête de la tige de commande (3) est constitué par une pige (6) montée coulissante dans l'axe de la perche (4) et prenant appui vers le bas sur une butée (48, 483) ménagée sur la perche (4) de telle sorte que son extrémité inférieure s'étende à l'intérieur et dans l'axe du manchon de centrage (5) jusqu'à un niveau correspondant à un enfoncement (h) déterminé de la tête de la tige de commande (3) dans le manchon de centrage (5).

3.- Dispositif de vérification selon la revendication 2, caractérisé par le fait que la perche se compose de plusieurs éléments (41, 42, 43) fixés les uns à la suite des autres par des organes de jonction (45) et que la pige de contrôle de niveau est constituée du même nombre d'éléments (61, 62, 63) montés coulissants chacun dans l'un des éléments de perche, chaque élément de pige (61, 62, 63) prenant appui vers le bas sur une butée (48) de l'élément de perche correspondant et vers le haut sur l'extrémité inférieure de l'élément de pige (61, 62) placé audessus de lui.

4.- Dispositif de vérification selon l'une des revendications précédentes, caractérisé par le fait que l'ensemble de la perche (4) de contrôle est constitué en une matière résistante et légère, et est manoeuvrée manuellement par un opérateur placé sur la plateforme (20).

**Patentansprüche**

1. Einrichtung zur Nachprüfung des Ausschaltens der Steuerstangen der Steuerbündel vor Herausziehen der Inneneinrichtungen eines Kernreaktors, der im Inneren einer Reaktorbecken bildenden Grube (10) einen durch eine lösbare Abdeckung verschlossenen und den Kern enthaltenden Behälter (1) eine Konstruktion von Steuerbündeln aufweist, die einzeln angebracht und vertikal in den oberen Inneneinrichtungen verschiebbar sind, die eine Führungsstruktur oberhalb des Kerns bilden, wobei jedes Bündel an seinem oberen Teil mit einen lösbaren Befestigungskopf (37) auf dem unteren Teil (32) eines Steuerstabes (3) versehen ist, der die Abdeckung durchdringt, auf der ein Hebe- und Senkmechanismus des in einer Führungshülse verschiebbar angebrachten Stabs Auflage hat, wobei der Behälter (1) nach durch Absenken der Steuerstäbe zur tiefen Position hervorgerufene Stillegung des Reaktors geöffnet werden kann, wobei die Mechanismen und die Führungshülsen zuerst zusammen mit dem Deckel, dann die Steuerstäbe (3) gehoben werden, die einer nach dem anderen mittels eines Ausschaltwerkzeugs ausgeschaltet worden sind, das an einer Beschickungsmaschine (2) aufgehängt ist, die aus einer oberhalb des Reaktorbeckens (10) verstellbaren und mit einer Einrichtung (23) zur Aufhängung der Werkzeuge und von Mitteln (22) zur Positionierung des aufgehängten Werkzeugs in der Vertikalen eines jeden der Stäbe (3) versehenen Plattform (20) gebildet ist, gekennzeichnet durch eine Stange (4) mit einer Länge, die größer als der Abstand zwischen der Plattform und der Höhe der Köpfe der Steuerstäbe ist, die an ihrem oberen Teil mit Mitteln (44) zur Aufhängung und Steuerung der Drehung der Stange um ihre vertikale Achse und an ihrem unteren Teil mit einer Zentrierhülse (5) versehen ist, die mit einem Innenanschlag (54), der auf einen sich in einer in bezug auf das obere Ende des Stabs (3) bestimmten Höhe sich befindlichen Teil (31) des Steuerstabs (3) zur Abstützung gelangen kann, und mit einem Arm (7) versehen ist, der sich quer in horizontaler Richtung in Höhe der Köpfe (32) der ausgeschalteten Stäbe erstreckt und von einer Länge ist, die größer als der Abstand zwischen den Achsen der Bündel ist, sowie durch ein Mittel (6) zur Kontrollierung der Höhe der Stange(4) in bezug auf den Kopf des Steuerstabs (3).

Einrichtung zur Nachprüfung nach Anspruch 1, dadurch gekennzeichnet, daß das Mittel zur Kontrolle der Höhe der Stange (4) in bezug auf den Kopf des Steuerstabs (3) durch einen Pegelstab (6) gebildet ist, der verschiebbar in der Achse der Stange (4) angebracht ist und nach unten auf einem Anschlag (48, 483) Auflager hat, der auf der Stange (4) derart ausgespart ist, daß sich sein unteres Ende nach nnen und in der Achse der Zentrierhülse (5) bis zu einer Höhe erstreckt, die einer bestimmten Eindringtiefe (h) des Kopfes des Steuerstabs (3) in der Zentrierhülse (5) entspricht.

Einrichtung zur Nachprüfung nach Anspruch 2, dadurch gekennzeichnet , daß die Stange aus mehreren Elementen (41, 42, 43) besteht, bei denen die einen nach den anderen mittels Verbindungseinrichtungen (45) befestigt sind, und daß der Höhenkontrollpegelstab aus derselben Anzahl von Elementen (61, 62, 63) gebildet ist, die jeweils in einem der Stangenelemente verschiebbar angebracht sind, wobei jedes Pegelstabelement (61, 62, 63) nach unten auf einem Anschlag (48) des entsprechenden Stangenelementes und nach oben auf dem unteren Ende des Pegelstabelementes (61, 62) Auflager hat, das oberhalb von ihm angeordnet ist.

Einrichtung zur Nachprüfung nach einem der vorhergehenden Ansprüche, dadurch gekennzeichnet, daß die Konstruktion der Kontrollstange (4) aus einem wiederstandsfähigen und leichten Material gebildet ist und von einem auf der Plattform (20) befindlichen Operateur von Hand bedient wird.

## Claims

1. A device for checking the disconnexion of the actuating rods of the control clusters before the removal of the internal equipment of a nuclear reactor comprising, within a pit (10) forming a cooling pond, a vessel (1) closed by a removable cover and containing the core, a set of control clusters fitted individually vertically slidably in upper internal equipment forming a guide structure above the core, each cluster being fitted at its upper part with a removable fixing head (37) on the lower part (32) of an actuating rod (3) penetrating the cover upon which is supported a raising and lowering mechanism of the rod fitted slidably in a guide sleeve, said vessel (1) being able to be opened after shutdown of the reactor caused by lowering of the control clusters into the bottom position, the mechanism and the guide sleeves being removed first with the cover, then the actuating rods (3) disconnected one by one by means of a disconnecting tool suspended from a refuelling machine (2) consisting of a platform (20) transportable above the cooling pond (10) and fitted with a tool suspension member (23) and with means (22) for positioning the suspended tool vertically above each of the rods (3), characterized by the fact that it comprises a pole (4) of greater length than the distance between the platform and the level of the heads of the actuating rods, fitted at its upper part with means (44) of suspending and actuating the rotation of the pole about its vertical axis, and at its lower part with a centering bushing (5) having an internal stop capable of coming to bear upon a part (31) of the actuating rod (3) located at a given level with reference to the upper end of the actuating rod (3), and with an arm (7) extending transversely and horizontally at the level of the heads (32) of the disconnected rods of greater length than the distance between the axes of the clusters, and a means (8) for checking the level of the pole (4) with reference to the head of the actuating rod (3).

2. A device for checking as claimed in claim 1, characterized by the fact that the means for checking the level of the pole (4) with reference to the head of the actuating rod (3), consists of a gage rod (6) fitted slidably in the axis of the pole (4) and bearing downwards against a stop (48, 483) made on the pole (4) so that its lower end extends inwards and in the axis of the centering bushing (5) to a level corresponding to a given insertion (h) of the head of the actuating rod (3) into the centering bushing (5).

3. A device for checking as claimed in claim 2, characterized by the fact that the pole is composed of a plurality elements (41, 42, 43) fixed one after the other by joint members (45) and that the level gage rod consists of the same number of elements (61, 62, 63) fitted slidably each in one of the pole elements, each gage rod element (81, 82, 83) bearing downwards against a stop (48) of the corresponding pole element and upwards against the lower end of the gage rod element (61, 82) placed above it.

4. A device for checking as claimed in any of the previous claims, characterized by the fact that the checking pole assembly (4) consists of a strong light material and is manipulated manually by an operator stationed on the platform (20).

Fig 1

Fig 2

0 098 781

Fig 3

Fig 6

Fig 4

Fig 5

0 098 781